# EUROPEAN PATENT APPLICATION

(11) **EP 4 318 711 A1**
(43) Date of publication of application: **07.02.2024**
(21) Application number: 22781014.0
(22) Date of filing: 29.03.2022
(51) Int. Cl.: H01M 10/0567, H01M 10/0569

(54) **NONAQUEOUS ELECTROLYIC SOLUTION, NONAQUEOUS ELECTROLYTIC SOLUTION BATTERY, AND METHOD FOR PRODUCING NONAQUEOUS ELECTROLYTIC SOLUTION BATTERY**

(30) Priority: 30.03.2021 JP 2021058532
(71) Applicant: Central Glass Co., Ltd., Yamaguchi 755-0001 (JP)
(72) Inventor: TANIGAWA Takahiro, Ube-shi, Yamaguchi 755-0001 (JP); TERADA Ryosuke, Ube-shi, Yamaguchi 755-0001 (JP); ESAKI Ryota, Ube-shi, Yamaguchi 755-0001 (JP); YAMAGUCHI Yukihiro, Ube-shi, Yamaguchi 755-0001 (JP); TAKAHASHI Mikihiro, Ube-shi, Yamaguchi 755-0001 (JP)
(74) Representative: Mewburn Ellis LLP
(86) International application number: PCT/JP2022/015726
(87) International publication number: WO 2022/210803

(57) **Abstract**

The present disclosure provides a nonaqueous electrolyte solution, containing: a compound represented by the specific Formula (1); a solute; and a nonaqueous organic solvent, a nonaqueous electrolyte solution battery, including: a positive electrode; a negative electrode; and the above nonaqueous electrolyte solution, and a method for producing a nonaqueous electrolyte solution battery, including: preparing the above nonaqueous electrolyte solution; and filling an empty cell including at least a positive electrode and a negative electrode with the nonaqueous electrolyte solution.

## Description

### TECHNICAL FIELD

The present disclosure relates to a nonaqueous electrolyte solution, a nonaqueous electrolyte solution battery, and a method for producing a nonaqueous electrolyte solution battery.

### BACKGROUND ART

As measures for improving cycle characteristics, storability at a high temperature, and durability of a nonaqueous electrolyte solution battery, optimization of various constituents of the battery such as active materials of a positive electrode and a negative electrode has been hitherto studied. Also, optimization of techniques relating to a nonaqueous electrolyte solution has been studied, and a variety of additives to prevent deterioration of the electrolyte solution due to decomposition of the electrolyte solution on surfaces of active positive and negative electrodes have been proposed. For example, Patent Literature 1 proposes that various battery characteristics such as storage characteristics at a high temperature are improved by adding vinylene carbonate to an electrolyte solution. This method is to prevent the electrolyte solution from decomposing on an electrode surface by coating an electrode with a polymer film formed by polymerization of vinylene carbonate, but this causes a problem that lithium ions have difficulty in passing through the film so that internal resistance is increased and a lot of gas is generated during storage at a high temperature. Addition of lithium difluorophosphate disclosed in Patent Literature 2 is effective to solve this problem, and it is known that the use of vinylene carbonate and lithium difluorophosphate together can provide a battery in which an increase in internal resistance and generation of gas are suppressed and that has a good storage characteristics at a high temperature.

Patent Literature 3 discloses that addition of a cyclic sulfur compound such as 1,3-propenesultone (PRS) as a single additive, rather than a combination of a plurality of additives, can suppress a generation amount of gas and prevent an increase in resistance.

### CITATION LIST

### PATENT LITERATURE

Patent Literature 1: JP3438636B
Patent Literature 2: JP3439085B
Patent Literature 3: JP4190162B

### SUMMARY OF INVENTION

### TECHNICAL PROBLEM

However, as a result of investigation of the present inventors, it has been found that even PRS was added, there is still room for improvement in preventing an increase in initial resistance.

The present disclosure is made in view of the above circumstances, and an object thereof is to provide a nonaqueous electrolyte solution and a nonaqueous electrolyte solution battery having an excellent effect of preventing an increase in initial resistance, and a method for producing a nonaqueous electrolyte solution battery.

### SOLUTION TO PROBLEM

In view of such a problem, the present inventors have conducted extensive research and found that a nonaqueous electrolyte solution containing a compound represented by the following Formula (1), a solute, and a nonaqueous organic solvent allowed for providing a nonaqueous electrolyte solution battery having an excellent effect of preventing an increase in an initial resistance value, and have completed the present invention.

That is, the present inventors found that the above problem can be solved by the following configurations.
[1] A nonaqueous electrolyte solution, containing: a compound represented by the following Formula (1); a solute; and a nonaqueous organic solvent. 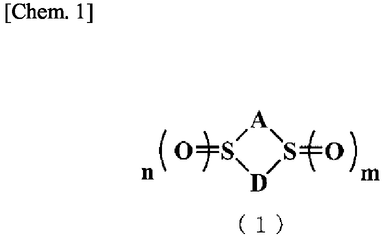 [In Formula (1), m and n each independently represent 1 or 2, A is a single bond, a linear hydrocarbon group having 1 to 5 carbon atoms, or a branched hydrocarbon group having 2 to 5 carbon atoms, any hydrogen atom of the hydrocarbon group is optionally substituted with a fluorine atom, an oxygen atom is optionally included between a carbon atom-carbon atom bond in the hydrocarbon group. D is a linear hydrocarbon group having 1 to 5 carbon atoms or a branched hydrocarbon group having 2 to 5 carbon atoms, any hydrogen atom of the hydrocarbon group is optionally substituted with a fluorine atom, an oxygen atom is optionally included between a carbon atom-carbon atom bond in the hydrocarbon group, and a total number of carbon atoms of the A and the D is 3 or more].
[2] The nonaqueous electrolyte solution according to [1], in which the A is a -CH₂- group, the D is a -C₂H₄- group or a -C₃H₆- group, and both of m and n represent 2.
[3] The nonaqueous electrolyte solution according to [1], in which the compound represented by the Formula (1) is at least one compound selected from the group consisting of compounds of the following (1a) to (1r),
   (1a) A = -CH₂- group, D = -C₂H₄- group, m = 1, n = 1
   (1b) A = -CH(CH₃)- group, D = -C₂H₄- group, m = 1, n = 1
   (1c) A = -C(CH₃)₂- group, D = -C₂H₄- group, m = 1, n = 1
   (1d) A = single bond, D = -C₃H₆- group, m = 1, n = 1
   (1e) A = -CH₂- group, D = -C₂H₄- group, m = 2, n= 2
   (1f) A = CH(CH₃)- group, D = -C₂H₄- group, m = 2, n = 2
   (1g) A = -C(CH₃)₂- group, D = -C₂H₄- group, m = 2, n = 2
   (1h) A = single bond, D = -C₃H₆- group, m = 2, n = 2
   (1i) A = -CH₂- group, D = -C₃H₆- group, m = 1, n = 1
   (1j) A = -CH(CH₃)- group, D = -C₃H₆- group, m = 1, n = 1
   (1k) A = -C(CH₃)₂- group, D = -C₃H₆- group, m = 1, n = 1
   (11) A = single bond, D = -C₄H₈- group, m = 1, n = 1
   (1m) A= -C₂H₄- group, D = -C₂H₄- group, m = 1, n = 1
   (1n) A = -CH₂- group, D = -C₃H₆- group, m = 2, n = 2
   (1o) A = -CH(CH₃)- group, D = -C₃H₆- group, m = 2, n = 2
   (1p) A = -C(CH₃)₂- group, D = -C₃H₆- group, m = 2, n = 2
   (1q) A = single bond, D = -C₄H₈-group, m = 2, n = 2
   (1r) A = -C₂H₄- group, D = -C₂H₄- group, m = 2, n = 2.
[4] The nonaqueous electrolyte solution according to [3], in which the compound represented by the Formula (1) is at least one compound selected from the group consisting of the compounds of (1a), (1b), (1c), (1d), (1e), (1f), (1h), (1i), (1j), (11), (1m), (1n), (1o), (1q), and (1r).
[5] The nonaqueous electrolyte solution according to [3] or [4], in which the compound represented by the Formula (1) is the compound of (1e) or (1n).
[6] The nonaqueous electrolyte solution according to any one of [1] to [5], in which the nonaqueous organic solvent contains at least one selected from the group consisting of cyclic carbonate and chain carbonate.
[7] The nonaqueous electrolyte solution according to [6], in which the cyclic carbonate is at least one selected from the group consisting of ethylene carbonate, propylene carbonate, and fluoroethylene carbonate, and the chain carbonate is at least one selected from the group consisting of ethyl methyl carbonate, dimethyl carbonate, diethyl carbonate, and methyl propyl carbonate.
[8] The nonaqueous electrolyte solution according to any one of [1] to [7], in which a content of the compound represented by the Formula (1) with respect to a total amount of the compound represented by the Formula (1), the solute, and the nonaqueous organic solvent is 0.01% by mass to 10.0% by mass.
[9] The nonaqueous electrolyte solution according to any one of [1] to [8], further containing: at least one selected from vinylene carbonate, fluoroethylene carbonate, ethylene sulfate, lithium bis(oxalato)borate, lithium difluorooxalatoborate, lithium difluorobis(oxalato)phosphate, lithium tetrafluorooxalatophosphate, lithium bis(fluorosulfonyl)imide, lithium bis(difluorophosphonyl)imide, lithium (difluorophosphonyl)(fluorosulfonyl)imide, lithium difluorophosphate, lithium fluorosulfonate, and methanesulfonyl fluoride.
[10] A nonaqueous electrolyte solution battery, including: a positive electrode; a negative electrode; and the nonaqueous electrolyte solution according to any one of [1] to [9].
[11] A method for producing a nonaqueous electrolyte solution battery, including:
   preparing the nonaqueous electrolyte solution according to any one of [1] to [9]; and
   filling an empty cell including at least a positive electrode and a negative electrode with the nonaqueous electrolyte solution.

### ADVANTAGEOUS EFFECTS OF INVENTION

The present disclosure allows for providing a nonaqueous electrolyte solution and a nonaqueous electrolyte solution battery having an excellent effect of preventing an increase in initial resistance, and a method for producing a nonaqueous electrolyte solution battery.

### DESCRIPTION OF EMBODIMENTS

Configurations and combinations thereof in the following embodiments are merely examples, and various modifications are possible without departing from the scope of the present disclosure. In addition, the present disclosure is not limited by the embodiments, but only by the scope of claims.

Ranges expressed with "to" in the present specification mean ranges including numerical values indicated before and after "to" as a lower limit and an upper limit.

An initial resistance value in the present specification represents a resistance value of a nonaqueous electrolyte solution battery after performing an initial charge and discharge for forming an electrode film and then performing two cycles of charge and discharge for stabilizing the battery. Specifically, the initial resistance value refers to a resistance value obtained by performing initial charge and discharge for forming an electrode film and then two cycles of charge and discharge for stabilizing the battery, and performing charge to 4.2 V at 25°C and 20 mA, and then measuring alternating current impedance at 25°C.

In the present specification, a capacity value after a storage test refers to a capacity obtained by storing the battery after the above alternating current impedance measurement at 60°C for two weeks, allowing the battery to discharge at 20mA to 2.5V at 25°C and charge to 4.2V at 20mA, then allowing the battery to discharge to 2.5V, and measuring a capacity at this last discharge.

Furthermore, in the present specification, a resistance value after the storage test is obtained by measuring the above capacity value after the storage test, charging the battery again at 20 mA to 4.2 V, and then measuring the alternating current impedance at 25°C.

The capacity and resistance after the storage test may be collectively referred to simply as "storage characteristics".

### [1. Nonaqueous Electrolyte Solution]

A nonaqueous electrolyte solution according to the present disclosure is a nonaqueous electrolyte solution containing a compound represented by the above Formula (1), a solute, and a nonaqueous organic solvent.

### <(I) Compound Represented by Formula (1)>

The nonaqueous electrolyte solution according to the present disclosure contains a compound represented by Formula (1). Hereinafter, the compound represented by Formula (1) may be described as "Component (I)".

When the nonaqueous electrolyte solution containing the compound represented by Formula (1) is used in a nonaqueous electrolyte solution battery (for example, a lithium ion secondary battery or a sodium ion secondary battery), the compound represented by Formula (1) decomposes on at least one of a positive electrode and a negative electrode, and forms a film having good ion conductivity on a surface of at least one of the positive electrode and the negative electrode. It is considered that this film prevents direct contact between the nonaqueous organic solvent or solute and an electrode active material, and reduces Li or Na ion dissociation energy of the solute. The present inventors presume that this results in an effect of preventing an increase in initial resistance of the nonaqueous electrolyte solution battery.

The compound represented by Formula (1) is described below.

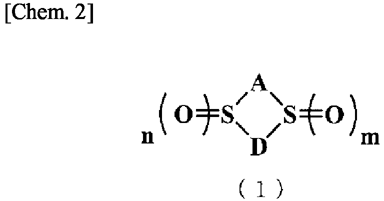

In Formula (1), m and n each independently represent 1 or 2.

A is a single bond, a linear hydrocarbon group having 1 to 5 carbon atoms, or a branched hydrocarbon group having 2 to 5 carbon atoms, any hydrogen atom of the hydrocarbon group may be substituted with a fluorine atom, and an oxygen atom may be included between a carbon atom-carbon atom bond in the hydrocarbon group.

D is a linear hydrocarbon group having 1 to 5 carbon atoms or a branched hydrocarbon group having 2 to 5 carbon atoms, any hydrogen atom of the hydrocarbon group may be substituted with a fluorine atom, and an oxygen atom may be included between a carbon atom-carbon atom bond in the hydrocarbon group. A total number of carbon atoms of the A and the D is 3 or more.

When the A represents a linear hydrocarbon group having 1 to 5 carbon atoms, the linear hydrocarbon group having 1 to 5 carbon atoms is not limited, but a linear alkyl group having 1 to 5 carbon atoms is preferable. Examples of the linear alkyl group having 1 to 5 carbon atoms include a -CH₂- group, a -C₂H₄- group, a -C₃H₆- group, and a -C₄H₈- group.

When the A represents a branched hydrocarbon group having 2 to 5 carbon atoms, the branched hydrocarbon group having 2 to 5 carbon atoms is not limited, but a branched alkyl group having 2 to 5 carbon atoms is preferable. Examples of the branched alkyl group having 2 to 5 carbon atoms include a - CH(CH₃)- group, a -C(CH₃)₂- group, and a -CH₂CH(CH₃)- group.

When the D represents a linear hydrocarbon group having 1 to 5 carbon atoms, examples of the linear hydrocarbon group having 1 to 5 carbon atoms may include the same examples as those of the hydrocarbon group having 1 to 5 carbon atoms when the A represents the hydrocarbon group having 1 to 5 carbon atoms, and preferred ranges are also the same.

When the D represents a linear hydrocarbon group having 2 to 5 carbon atoms, examples of the linear hydrocarbon group having 2 to 5 carbon atoms may include the same examples as those of the hydrocarbon group having 2 to 5 carbon atoms when the A represents the hydrocarbon group having 2 to 5 carbon atoms, and preferred ranges are also the same.

The total number of carbon atoms of the A and the D is 3 or more. An upper limit of the total number of carbon atoms of the A and the D is not limited, but is 10, for example.

In the compound represented by Formula (1), the hydrocarbon group when the A represents the hydrocarbon group and the hydrocarbon group represented by the D preferably have the smaller number of carbon atoms in the hydrocarbon group as long as a stable cyclic structure can be formed. It is because there is a tendency that the smaller number of carbon atoms equates to the lower resistance when the compound forms a film. In the above examples, the A is preferably a -CH₂- group and the D is preferably a -C₂H₄- group or a -C₃H₆- group. At least one of m and n is preferably 2 from a viewpoint of ease of synthesis, and more preferably both m and n are 2 from the viewpoint of ease of synthesis. Therefore, the compound particularly preferably has a structure in which the A is a -CH₂- group, the D is a -C₂H₄- group or a -C₃H₆- group, and both m and n are 2.

Specifically, the compound represented by Formula (1) is preferably at least one selected from the group consisting of compounds represented by the following Formulas (1a) to (1r).

The compound represented by Formula (1) may be at least one compound selected from the group consisting of the compounds represented by (1a), (1b), (1c), (1d), (1e), (1f), (1h), (1i), (1j), (11), (1m), (1n), (1o), (1q), and (1r), which have a small number of carbon atoms of the A and the D in total, from a viewpoint of preventing the increase in the initial resistance.

From the viewpoint of ease of synthesis, the compound represented by Formula (1) is more preferably the compound represented by (1e) or (1n).
(1a) A = -CH₂- group, D = -C₂H₄- group, m = 1, n = 1
(1b) A= -CH(CH₃)- group, D = -C₂H₄- group, m = 1, n = 1
(1c) A = -C(CH₃)₂- group, D = -C₂H₄- group, m = 1, n = 1
(1d) A= single bond, D = -C₃H₆- group, m = 1, n = 1
(1e) A = -CH₂- group, D = -C₂H₄- group, m = 2, n= 2
(1f) A = CH(CH₃)- group, D = -C₂H₄- group, m = 2, n = 2
(1g) A = -C(CH₃)₂- group, D = -C₂H₄- group, m = 2, n = 2
(1h) A = single bond, D = -C₃H₆- group, m = 2, n = 2
(1i) A = -CH₂- group, D = -C₃H₆- group, m = 1, n = 1
(1j) A = -CH(CH₃)- group, D = -C₃H₆- group, m = 1, n = 1
(1k) A= -C(CH₃)₂- group, D = -C₃H₆- group, m = 1, n = 1
(11) A = single bond, D = -C₄H₈- group, m = 1, n = 1
(1m) A= -C₂H₄- group, D = -C₂H₄- group, m = 1, n = 1
(1n) A = -CH₂- group, D = -C₃H₆- group, m = 2, n = 2
(1o) A = -CH(CH₃)- group, D = -C₃H₆- group, m = 2, n = 2
(1p) A = -C(CH₃)₂- group, D = -C₃H₆- group, m = 2, n = 2
(1q) A = single bond, D = -C₄H₈-group, m = 2, n = 2
(1r) A = -C₂H₄- group, D = -C₂H₄- group, m = 2, n = 2

In the nonaqueous electrolyte solution according to the present disclosure, a lower limit of a content of the compound represented by the above Formula (1) (hereafter, also described as "concentration of the compound represented by Formula (1)") with respect to a total amount (100% by mass) of the compound represented by the above Formula (1), the solute, and the nonaqueous organic solvent is preferably 0.01% by mass or more, more preferably 0.05% by mass or more, and still more preferably 0.2% by mass or more. An upper limit of the concentration of the compound represented by Formula (1) is preferably 10.0% by mass or less, more preferably 2.0% by mass or less, further preferably 1.2% by mass or less, and particularly preferably 0.6% by mass or less.

Setting the concentration of the compound represented by Formula (1) to 0.01% by mass or more allows for easily achieving an effect of preventing an increase in initial resistance of the nonaqueous electrolyte solution battery using the nonaqueous electrolyte solution. On the other hand, setting the concentration of the compound represented by Formula (1) to 10.0% by mass or less allows for preventing excessive residue in the electrolyte solution. If the compound represented by Formula (1) has a saturated concentration in the above preferred concentration range, from a viewpoint of preventing generation of excessive insoluble components in the electrolyte solution, the upper limit of the concentration range is preferably the saturated concentration of the compound represented by Formula (1). The above saturated concentration is at 25°C and 1 atm (= 0.10132 MPa).

As one aspect of the nonaqueous electrolyte solution according to the present disclosure, one of the compounds represented by Formula (1) may be used alone, or two or more of the compounds represented by Formula (1) may be used by mixing them in any combination and ratio according to an application.

The method for synthesizing the compound represented by the above Formula (1) is not limited, but for example, Compounds (1a), (1d), (1e), (1h), (1i), (11) (1m), (1n), (1q), and (1r) can be obtained by oxidizing 1,3-dithiolane, 1,2-dithiolane, 1,3-dithiane, and 1,4-dithiane, which can be purchased from Tokyo Chemical Industry Co., Ltd. and the like, in an aqueous hydrogen peroxide solution. Similarly, Compounds (1b) and (1f) can be obtained by causing ethanedithiol to react with acetaldehyde in water to prepare 2-methyl-1,3-dithiolane and oxidizing the obtained 2-methyl-1,3-dithiolane in the aqueous hydrogen peroxide solution. Similarly, Compounds (1j) and (1o) can be obtained by causing propanedithiol to react with acetaldehyde in water to prepare 2-methyl-1,3-dithiane and oxidizing the obtained 2-methyl-1,3-dithiane in the aqueous hydrogen peroxide solution. Similarly, Compounds (1c) and (1g) can be obtained by causing ethanedithiol to react with acetone in water to prepare 2,2-dimethyl-1,3-dithiolane and oxidizing the obtained 2,2-dimethyl-1,3-dithiolane in the aqueous hydrogen peroxide solution. Similarly, Compounds (1k) and (1p) can be obtained by causing propanedithiol to react with acetone in water to prepare 2,2-dimethyl-1,3-dithiane and oxidizing the obtained 2,2-dimethyl-1,3-dithiane in the aqueous hydrogen peroxide solution.

### <(II) Solute>

The nonaqueous electrolyte solution according to the present disclosure contains the solute.

The solute is not limited, but is preferably an ionic salt, more preferably an ionic salt containing fluorine.

The solute is preferably, for example, an ionic salt containing a pair of at least one cation selected from the group consisting of alkali metal ions such as lithium ions and sodium ions, alkaline earth metal ions such as magnesium ions, and quaternary ammonium, and at least one anion selected from the group consisting of a hexafluorophosphate anion, a tetrafluoroborate anion, a perchlorate anion, a hexafluoroarsenate anion, a hexafluoroantimonate anion, a trifluoromethanesulfonate anion, a bis(trifluoromethanesulfonyl)imide anion, a bis(pentafluoroethanesulfonyl)imide anion, a (trifluoromethanesulfonyl)(pentafluoroethanesulfonyl)imide anion, a bis(fluorosulfonyl)imide anion, a (trifluoromethanesulfonyl)(fluorosulfonyl)imide anion, a (pentafluoroethanesulfonyl)(fluorosulfonyl)imide anion, a tris(trifluoromethanesulfonyl)methide anion, a bis(difluorophosphonyl)imide anion, a (difluorophosphonyl)(trifluoromethanesulfonyl)imide anion, a (difluorophosphonyl)(fluorosulfonyl)imide anion, and a difluorophosphate anion.

One type of these solutes may be used alone, or two or more types may be mixed and used in any combination and any ratio according to an application.

Among the above solutes, in view of energy density, output characteristics, life, and the like of a nonaqueous electrolyte solution battery, the cation is preferably at least one selected from the group consisting of lithium ions, sodium ions, magnesium ions, and quaternary ammonium, and the anion is preferably at least one selected from the group consisting of a hexafluorophosphate anion, a tetrafluoroborate anion, a bis(trifluoromethanesulfonyl)imide anion, a bis(fluorosulfonyl)imide anion, a bis(difluorophosphonyl)imide anion, a (difluorophosphonyl)(fluorosulfonyl)imide anion, and a difluorophosphate anion.

A total amount of the solute in the nonaqueous electrolyte solution according to the present disclosure (hereinafter, also described as "solute concentration") is not limited, but a lower limit is preferably 0.5 mol/L or more, more preferably 0.7 mol/L or more, and still more preferably 0.9 mol/L or more. In addition, an upper limit of the solute concentration is preferably 5.0 mol/L or less, more preferably 4.0 mol/L or less, and still more preferably 2.0 mol/L or less. Setting the solute concentration to 0.5 mol/L or more achieves preventing deterioration of the cycle characteristics and the output characteristics of the nonaqueous electrolyte solution battery due to deterioration in ionic conductivity, and setting the solute concentration to 5.0 mol/L or less achieves preventing the deterioration in ionic conductivity, and the deterioration in cycle characteristics and output characteristics of the nonaqueous electrolyte solution battery due to an increase in viscosity of the nonaqueous electrolyte solution.

### <(III) Nonaqueous Organic Solvent>

The type of the nonaqueous organic solvent to be used in the nonaqueous electrolyte solution according to the present disclosure is not limited as long as the solvent can dissolve the compound represented by the above Formula (1) and the solute, and for example, any nonaqueous organic solvent such as carbonates, esters, ethers, lactones, nitriles, imides, and sulfones can be used.

Specifically, the nonaqueous organic solvent is preferably at least one selected from the group consisting of ethyl methyl carbonate (hereinafter, also described as "EMC"), dimethyl carbonate (hereinafter, also described as "DMC"), diethyl carbonate (hereinafter, also described as "DEC"), methyl propyl carbonate, ethyl propyl carbonate, methyl butyl carbonate, 2,2,2-trifluoroethyl methyl carbonate, 2,2,2-trifluoroethyl ethyl carbonate, 2,2,2-trifluoroethyl propyl carbonate, bis(2,2,2-trifluoroethyl) carbonate, 1,1,1,3,3,3-hexafluoro-1-propylmethyl carbonate, 1,1,1,3,3,3-hexafluoro-1-propylethyl carbonate, 1,1,1,3,3,3-hexafluoro-1-propylpropyl carbonate, bis(1,1,1,3,3,3-hexafluoro-1-propyl) carbonate, ethylene carbonate (hereinafter, also described as "EC"), propylene carbonate (hereinafter, also described as "PC"), butylene carbonate, fluoroethylene carbonate (hereinafter, also described as "FEC"), vinylene carbonate (hereinafter, also described as "VC"), difluoroethylene carbonate, methyl acetate, ethyl acetate, methyl propionate, ethyl propionate, methyl 2-fluoropropionate, ethyl 2-fluoropropionate, diethyl ether, dibutyl ether, diisopropyl ether, 1,2-dimethoxyethane, tetrahydrofuran, 2-methyltetrahydrofuran, furan, tetrahydropyran, 1,3-dioxane, 1,4-dioxane, N,N-dimethylformamide, acetonitrile, propionitrile, dimethylsulfoxide, sulfolane, γ-butyrolactone, and γ-valerolactone.

In the present disclosure, an ionic liquid, which has a salt structure, may be used as the nonaqueous organic solvent.

The above nonaqueous organic solvent containing at least one selected from the group consisting of cyclic carbonates and chain carbonates can provide the nonaqueous electrolyte solution battery with excellent cycle characteristics at high temperatures, and from the viewpoint of it, the above nonaqueous organic solvent preferably contains at least one selected from the group consisting of cyclic carbonates and chain carbonates. The above nonaqueous organic solvent containing at least one selected from the group consisting of esters can provide the nonaqueous electrolyte solution battery with excellent input and output characteristics at low temperatures, and from the viewpoint of it, the above nonaqueous organic solvent preferably contains at least one selected from the group consisting of esters.

When the above nonaqueous organic solvent contains at least one selected from the group consisting of cyclic carbonates and chain carbonates, a content of at least one selected from the group consisting of cyclic carbonates and chain carbonates (or a total content of two or more selected from the group consisting of cyclic carbonates and chain carbonates, if the above nonaqueous organic solvent contains two or more selected from the group consisting of cyclic carbonates and chain carbonates) is preferably 60% by mass to 100% by mass with respect to a total amount of the nonaqueous organic solvent.

When the above nonaqueous organic solvent contains at least one selected from the group consisting of esters, a content of at least one selected from the group consisting of esters (or a total content of two or more selected from the group consisting of esters, if the above nonaqueous organic solvent contains two or more selected from the group consisting of esters) is preferably 1% by mass to 20% by mass with respect to the total amount of the nonaqueous organic solvent.

Specific examples of the above cyclic carbonate include EC, PC, butylene carbonate, and FEC, and at least one selected from the group consisting of EC, PC, and FEC is preferable.

Specific examples of the above chain carbonate include EMC, DMC, DEC, methyl propyl carbonate, ethyl propyl carbonate, 2,2,2-trifluoroethyl methyl carbonate, 2,2,2-trifluoroethyl ethyl carbonate, 1,1,1,3,3,3-hexafluoro-1-propylmethyl carbonate, and 1,1,1,3,3,3-hexafluoro-1-propylethyl carbonate, and at least one selected from the group consisting of EMC, DMC, DEC, and methyl propyl carbonate is preferable.

Specific examples of the above ester include methyl acetate, ethyl acetate, methyl propionate, ethyl propionate, methyl 2-fluoropropionate, and ethyl 2-fluoropropionate.

One type of these nonaqueous organic solvents may be used alone, or two or more types may be mixed and used in any combination and any ratio according to an application.

### <Another Additive>

An additive component to be commonly used in the nonaqueous electrolyte solution according to the present disclosure may be further added in any ratio as long as the gist of the present disclosure is not impaired.

Specific examples of another additive include compounds that have an overcharge prevention effect, a fihn-forming effect on a negative electrode, and a positive electrode protective effect, such as cyclohexylbenzene, cyclohexylfluorobenzene, fluorobenzene, biphenyl, difluoroanisole, tert-butylbenzene, tert-amylbenzene, 2-fluorotoluene, 2-fluorobiphenyl, vinylene carbonate, dimethylvinylene carbonate, vinylethylene carbonate, fluoroethylene carbonate, trans-difluoroethylene carbonate, methyl propargyl carbonate, ethyl propargyl carbonate, dipropargyl carbonate, maleic anhydride, succinic anhydride, propanesultone, 1,3-propanesultone, 1,3-propenesultone (hereinafter, also described as "PRS"), butanesultone, ethylene sulfate (hereinafter, also described as "ESA"), methylene methanedisulfonate, dimethylene methanedisulfonate, trimethylene methanedisulfonate, methyl methanesulfonate, 1,6-diisocyanatohexane, tris(trimethylsilyl)borate, succinonitrile, adiponitrile, (ethoxy)pentafluorocyclotriphosphazene, lithium difluorobis(oxalato)phosphate (hereinafter, also described as "DFBOP"), sodium difluorobis(oxalato)phosphate, potassium difluorobis(oxalato)phosphate, lithium difluorooxalatoborate (hereinafter, also described as "DFOB"), sodium difluorooxalatoborate, potassium difluorooxalatoborate, lithium bis(oxalato)borate (hereinafter, also described as "BOB"), sodium bis(oxalato)borate, potassium bis(oxalato)borate, lithium tetrafluorooxalatophosphate (hereinafter, also described as "TFOP"), sodium tetrafluorooxalatophosphate, potassium tetrafluorooxalatophosphate, lithium tris(oxalato)phosphate, lithium ethylfluorophosphate, lithium difluorophosphate, lithium fluorophosphate, ethenesulfonyl fluoride, lithium fluorosulfonate (hereinafter, also described as "FS"), trifluoromethanesulfonyl fluoride, methanesulfonyl fluoride (hereinafter, also described as "MSF"), and phenyl difluorophosphate.

A content of another additive in the nonaqueous electrolyte solution is preferably 0.01% by mass or more and 8.0% by mass or less with respect to a total amount of the nonaqueous electrolyte solution.

When the ionic salt exemplified as the solute is less than 0.5 mol/L, which is the lower limit of the suitable concentration of the solute, in the nonaqueous electrolyte solution, the ionic salt can exert a film-forming effect on a negative electrode and a positive electrode protective effect as "another additive". In this case, the content in the nonaqueous electrolyte solution is preferably 0.01% by mass to 5.0% by mass with respect to the total amount of the nonaqueous electrolyte solution.

Examples of the ionic salt in this case include lithium trifluoromethanesulfonate, sodium trifluoromethanesulfonate, potassium trifluoromethanesulfonate, magnesium trifluoromethanesulfonate, lithium bis(trifluoromethanesulfonyl)imide, sodium bis(trifluoromethanesulfonyl)imide, potassium bis(trifluoromethanesulfonyl)imide, magnesium bis(trifluoromethanesulfonyl)imide, lithium bis(fluorosulfonyl)imide (hereinafter, also described as "FSI"), sodium bis(fluorosulfonyl)imide, potassium bis(fluorosulfonyl)imide, magnesium bis(fluorosulfonyl)imide, lithium (trifluoromethanesulfonyl)(fluorosulfonyl)imide, sodium (trifluoromethanesulfonyl)(fluorosulfonyl)imide, potassium (trifluoromethanesulfonyl)(fluorosulfonyl)imide, magnesium (trifluoromethanesulfonyl)(fluorosulfonyl)imide, lithium bis(difluorophosphonyl)imide, sodium bis(difluorophosphonyl)imide, potassium bis(difluorophosphonyl)imide, magnesium bis(difluorophosphonyl)imide, lithium (difluorophosphonyl)(fluorosulfonyl)imide, sodium (difluorophosphonyl)(fluorosulfonyl)imide, potassiume (difluorophosphonyl)(fluorosulfonyl)imide, magnesium (difluorophosphonyl)(fluorosulfonyl)imide, lithium (difluorophosphonyl)(trifluoromethanesulfonyl)imide, sodium (difluorophosphonyl)(trifluoromethanesulfonyl)imide, potassium (difluorophosphonyl)(trifluoromethanesulfonyl)imide, magnesium (difluorophosphonyl)(trifluoromethanesulfonyl)imide, lithium difluorophosphate (hereinafter, also described as "DFP"), and sodium difluorophosphate.

In addition, alkali metal salts other than the above solutes (lithium salt, sodium salt, potassium salt, magnesium salt) may be used as additives.

Specific examples include carboxylates such as lithium acrylate, sodium acrylate, lithium methacrylate, and sodium methacrylate, and sulfate ester salts such as lithium methyl sulfate, sodium methyl sulfate, lithium ethyl sulfate, and sodium ethyl sulfate.

When the content of the compound listed as the solvent in the nonaqueous electrolyte solution is as small as 0.1% by mass to 2.0% by mass with respect to the total amount of the nonaqueous electrolyte solution, the compound as "another additive" can exhibit a film-forming effect on a negative electrode and a positive electrode protective effect. Specific examples of the compound include FEC and VC.

From a viewpoint of at least one of the effect of preventing the increase in the initial resistance, an effect of improving capacity after a storage test, and an effect of improving resistance after a storage test, in the above another additive, the nonaqueous electrolyte solution according to the present disclosure preferably contains at least one selected from vinylene carbonate, fluoroethylene carbonate, ethylene sulfate, lithium bis(oxalato)borate, lithium difluorooxalatoborate, lithium difluorobis(oxalato)phosphate, lithium tetrafluorooxalatophosphate, lithium bis(fluorosulfonyl)imide, lithium bis(difluorophosphonyl)imide, lithium (difluorophosphonyl)(fluorosulfonyl)imide, lithium difluorophosphate, lithium fluorosulfonate, and methanesulfonyl fluoride.

A content of another additive is preferably 0.01% by mass to 5.0% by mass with respect to the total amount of the nonaqueous electrolyte solution.

In particular, from the viewpoint of preventing an increase in an initial resistance value, at least one selected from ethylene sulfate, lithium difluorooxalatoborate, lithium bis(fluorosulfonyl)imide, lithium difluorophosphate, lithium fluorosulfonate, and methanesulfonyl fluoride is more preferable.

In addition, the nonaqueous electrolyte solution according to the present disclosure may also contain a polymer, and as in the case of being used in a nonaqueous electrolyte solution battery referred to as a polymer battery, the nonaqueous electrolyte solution can be used after quasi-solidified with a gelling agent or a cross-linked polymer. A polymer solid electrolyte includes one containing the nonaqueous organic solvent as a plasticizer.

The above polymer is not limited as long as the polymer is an aprotic polymer capable of dissolving the compound represented by the above Formula (1), the above solute, and the above another additive. Examples of the above polymer include polymers having polyethylene oxide as a main chain or a side chain, homopolymers or copolymers of polyvinylidene fluoride, methacrylic acid ester polymers, and polyacrylonitrile. When a plasticizer is added to these polymers, an aprotic nonaqueous organic solvent is preferred among the above nonaqueous organic solvents.

### [2. Nonaqueous Electrolyte Solution Battery]

The nonaqueous electrolyte solution battery according to the present disclosure includes, at least, the nonaqueous electrolyte solution according to the present disclosure described above, a negative electrode, and a positive electrode. Furthermore, a separator, an exterior body, and the like are preferably included.

Although the negative electrode is not limited, a material capable of reversibly intercalating and deintercalating alkali metal ions such as lithium ions and sodium ions, or alkaline earth metal ions is preferably used as the negative electrode.

Although the positive electrode is not limited, a material capable of reversibly intercalating and deintercalating alkali metal ions such as lithium ions and sodium ions, or alkaline earth metal ions is preferably used as the positive electrode.

For example, when the cation is a lithium ion, lithium metal, alloys and intermetallic compounds of lithium with other metals, various carbon materials capable of absorbing and desorbing lithium, metal oxides, metal nitrides, activated carbon, conductive polymers, and the like are used as negative electrode materials. Examples of the above carbon material include graphitizable carbon, nongraphitizable carbon (also referred to as hard carbon) having an interplanar spacing of (002) planes of 0.37 nm or more, and graphite having an interplanar spacing of (002) planes of 0.37 nm or less. As the graphite, artificial graphite, natural graphite, and the like are used.

For example, when the cation is a lithium ion, a positive electrode material can use lithium-containing transition metal composite oxides such as LiCoO₂, LiNiOz, LiMnOz, LiMn₂O₄, a mixture of a plurality of transition metals such as Co, Mn, and Ni of these lithium-containing transition metal composite oxides, the lithium-containing transition metal composite oxides in which a part of the transition metals is substituted with a metal other than the transition metals, phosphate compounds of transition metals such as LiFePO₄, LiCoPO₄, LiMnPO₄, which are referred to as olivine, oxides such as TiOz, V₂O₅, and MoO₃, sulfides such as TiS₂ and FeS, conductive polymers such as polyacetylene, polyparaphenylene, polyaniline, and polypyrrole, activated carbon, radical-generating polymers, carbon materials, and the like.

An electrode sheet obtained by adding acetylene black, ketjen black, carbon fiber, or graphite as a conductive material, and polytetrafluoroethylene, polyvinylidene fluoride, SBR resin, or the like as a binder to the positive electrode materials and negative electrode materials and then allowing the mixture to be molded into a sheet shape, may be used.

As a separator for preventing contact between the positive electrode and the negative electrode, a nonwoven fabric or porous sheet made of polyolefin, polyethylene, paper, glass fiber, or the like is used.

An electrochemical device having a shape such as a coin shape, a cylindrical shape, a square shape, or an aluminum laminate sheet shape is assembled based on the above elements.

### [3. Method for Producing Nonaqueous Electrolyte Solution Battery]

The present disclosure also relates to a method for producing a nonaqueous electrolyte solution battery.

The method for producing a nonaqueous electrolyte solution battery, includes: preparing the nonaqueous electrolyte solution according to the present disclosure, and filling an empty cell including at least a positive electrode and a negative electrode with the nonaqueous electrolyte solution.

### EXAMPLES

The present disclosure will be described in more detail below with reference to Examples, but the scope of the present disclosure is not limited by the description of these Examples.

### [Preparation of Nonaqueous Electrolyte Solutions of Examples and Comparative Examples]

### <Comparative Example 1-1>

### (Preparation of Comparative Nonaqueous Electrolyte Solution 1-1)

EC and EMC were mixed at a volume ratio of 30:70 in a glove box having a dew point of -60°C or lower. After that, LiPF₆ was added to the mixture such that the concentration of LiPF₆ was adjusted to 1.0 mol/L with respect to the total amount of the nonaqueous electrolyte solution while an internal temperature of the glove box was kept at 40°C or lower. Then, PRS as a comparative compound was added such that the concentration of PRS was adjusted to 0.03% by mass with respect to a total amount of the nonaqueous organic solvent, LiPF₆, and PRS, and was dissolved by stirring for one hour to obtain Comparative Nonaqueous Electrolyte Solution 1-1 according to Comparative Example 1-1.

### <Comparative Examples 1-2 to 1-6>

### (Preparation of Comparative Nonaqueous Electrolyte Solutions 1-2 to 1-6)

Except that the content of PRS was changed as shown in Tables 1 and 2, Comparative Nonaqueous Electrolyte Solutions 1-2 to 1-6 according to Comparative Examples 1-2 to 1-6 were prepared in the same manner as preparation of Comparative Nonaqueous Electrolyte Solution 1-1.

### <Example 1-1>

### (Preparation of Nonaqueous Electrolyte Solution 1-1)

EC and EMC were mixed at a volume ratio of 30:70 in a glove box having a dew point of -60°C or lower. After that, LiPF₆ was added to the mixture such that the concentration of LiPF₆ was adjusted to 1.0 mol/L with respect to the total amount of the nonaqueous electrolyte solution while an internal temperature of the glove box was kept at 40°C or lower. Then, Compound (1e) as Component (I) was added such that the concentration of Compound (1e) was adjusted to 0.03% by mass with respect to a total amount of the nonaqueous organic solvent, LiPF₆, and Compound (1e), and was dissolved by stirring for one hour to obtain Nonaqueous Electrolyte Solution 1-1 according to Example 1-1.

### <Examples 1-2 to 1-10>

### (Preparation of Nonaqueous Electrolyte Solutions 1-2 to 1-10)

Except that the type and the content of Component (I) were changed as shown in Tables 1 and 2, Nonaqueous Electrolyte Solutions 1-2 to 1-10 according to Examples 1-2 to 1-10 were prepared in the same manner as the preparation of Nonaqueous Electrolyte Solution 1-1.

### <Examples 2-1 to 2-7>

### (Preparation of Nonaqueous Electrolyte Solutions 2-1 to 2-7)

Except that compounds listed in Table 4 as another additive were dissolved so as to have contents listed in Table 4, Nonaqueous Electrolyte Solutions 2-1 to 2-7 according to Examples 2-1 to 2-7 were prepared in the same manner as Example 1-3.

### <Examples 3-1 to 3-7>

### (Preparation of Nonaqueous Electrolyte Solutions 3-1 to 3-7)

Except that compounds listed in Table 5 as another additive were dissolved so as to have contents listed in Table 5, Nonaqueous Electrolyte Solutions 3-1 to 3-7 according to Examples 3-1 to 3-7 were prepared in the same manner as Example 1-9.

### <Examples 4-1 to 4-4>

### (Preparation of Nonaqueous Electrolyte Solutions 4-1 to 4-2)

Except that compounds listed in Table 7 as another additive were dissolved so as to have contents listed in Table 7, Nonaqueous Electrolyte Solutions 4-1 and 4-2 according to Examples 4-3 and 4-4 were respectively prepared in the same manner as Example 1-3 or Example 1-9.

Nonaqueous Electrolyte Solutions 1-3 and 1-9 were used in Examples 4-1 and 4-2, respectively.

### <Example 1-3a>

### (Preparation of Nonaqueous Electrolyte Solution 1-3a)

Except that the content of Component (I) was set to 0.3% by mass, and PRS as another additive was dissolved to have a content of 0.1% by mass as shown in Table 6, Nonaqueous Electrolyte Solution 1-3a according to Example 1-3a was prepared in the same manner as Example 1-3. In Nonaqueous Electrolyte Solution 1-3a, PRS was contained not as a comparative compound but as another additive used in combination with Component (I).

In the following Tables 1 to 7, the content of another additive represents a concentration (% by mass) with respect to a total amount of Component (I), another additive, the nonaqueous organic solvent, and the solute.

In the following Tables 1 to 7, the content of Component (I) represents the concentration (% by mass) with respect to the total amount of Component (I), the solute, and the nonaqueous organic solvent.

### [Production of Nonaqueous Electrolyte Solution Battery]

### (Production of NCM811 Positive Electrode)

4.5% by mass of polyvinylidene fluoride (PVDF) as a binder and 4.5% by mass of acetylene black as a conductive material were mixed to 91.0% by mass of LiNi_{0.8}Co_{0.1}Mn_{0.1}O₂ powder, and N-methyl-2-pyrrolidone was further added to the mixture to produce a positive electrode mixture paste. The paste was applied onto both sides of aluminum foil (A1085), and the resultant product was dried and pressed, and then punched into 4 cm × 5 cm to obtain an NCM811 positive electrode for test.

### <Production of Natural Graphite Negative Electrode>

0.5% by mass of carbon nanotubes, 2.0% by mass of styrene-butadiene rubber, 1.0% by mass of sodium carboxymethylcellulose, and water were mixed to 96.5% by mass of natural graphite powder to produce a negative electrode mixture paste. The paste was applied onto one side of copper foil, and the resultant product was dried and pressed, and then punched into 4 cm × 5 cm to obtain a natural graphite negative electrode for test.

### (Production of Silicon-Containing Graphite Negative Electrode)

7.0% by mass of nanosilicon, 3.0% by mass of conductive material (HS-100), 2.0% by mass of carbon nanotube (VGCF), 2.0% by mass of styrene-butadiene rubber, 1.0% by mass of sodium carboxymethylcellulose, and water were mixed to 85.0% by mass of artificial graphite powder, and a negative electrode mixture paste was produced. The paste was applied onto both sides of copper foil, and the resultant product was dried and pressed, and then punched into 4 cm × 5 cm to obtain a silicon-containing graphite negative electrode for test.

### (Production of Nonaqueous Electrolyte Solution Battery)

Under an argon atmosphere at a dew point of -50°C or lower, terminals were welded to the above NCM811 positive electrode, and both sides of the welded product were then stacked between two polyethylene separators (5 cm × 6 cm), and the outside of the stacked product were stacked between two natural graphite negative electrodes (or silicon-containing graphite negative electrodes) to which terminals had been welded in advance so that a surface of the negative electrode active material faces a surface of the positive electrode active material. The resultant product was put in an aluminum laminated bag having an opening on one side, the nonaqueous electrolyte solution was vacuum-injected into the bag, and the opening was then sealed with heat to produce aluminum laminated nonaqueous electrolyte solution batteries according to Examples and Comparative Examples. The nonaqueous electrolyte solution used those described in Tables 1 to 67. A battery capacity standardized by a weight of a positive electrode active material was 100 mAh. 1 mAh is 3.6 C.

The natural graphite negative electrode was used in the nonaqueous electrolyte solution batteries shown in Tables 1 to 6 described later, and the silicon-containing graphite negative electrode was used in the nonaqueous electrolyte solution batteries shown in Table 7 described later.

### [Evaluation]

### -Initial Charge and Discharge-

A nonaqueous electrolyte solution battery was put in a constant temperature bath at 25°C and, in this state, connected to a charge and discharge device. Charge was performed at 20 mA (0.2 C rate) to 4.2 V After 4.2 V was maintained for one hour, discharge was performed at 20 mA to 2.5 V. This was defined as one charge and discharge cycle, and three cycles in total of charge and discharge were performed to stabilize the battery.

### -Measurement of Initial Resistance-

After the initial charge and discharge, the battery was charged at 25°C and 20 mA to 4.2 V, and then the battery was removed from the charge and discharge device and the alternating current impedance was measured at 25°C. An alternating current impedance value at this time was taken as the initial resistance value.

### -Measurement of Capacity and Resistance after Storage Test-

After measuring the alternating current impedance, the battery was placed in a constant temperature bath at 60°C. Two weeks later, the battery was taken out, placed in the constant temperature bath at 25°C, connected to the charge and discharge device, and discharged at 20mA to 2.5V. Subsequently, after charging at 20mA to 4.2V, the battery was discharged until 2.5V. The capacity measured during this discharge was taken as the capacity after the storage test at 60°C. Then, after charging to 4.2 V at 20 mA again, the battery was removed from the charge and discharge device, and the alternating current impedance was measured at 25°C. An alternating current impedance value at this time was taken as a resistance value after the storage test.

Each evaluation result of Example 1-1 is shown in Table 1 as a relative value when the initial resistance and the resistance and capacity after the storage test of Comparative Example 1-1 are set to 100, respectively. In the same way, in Tables 1 and 2, evaluation results are also shown as relative values in Examples and Comparative Examples in which the content of Component (I) corresponds to the content of the comparative compound.

Table 3 shows the evaluation results of Examples 1-1 to 1-10 and Comparative Examples 1-1, 1-2, and 1-4 to 1-6 as relative values when the initial resistance and the resistance and capacity after the storage test of Comparative Example 1-3 are set to 100, respectively. The evaluation results of Examples 2-4 and 3-4, which will be described later, are also shown as relative values when the evaluation results of Comparative Example 1-3 are set to 100.

The evaluation results of Examples 2-1 to 2-7 described in Table 4 and Examples 3-1 to 3-7 described in Table 5 are also shown as relative values. Table 4 shows the relative values of the evaluation results of Examples when the evaluation results of Example 1-3 are set to 100, and Table 5 shows the relative values of the evaluation results of Examples when the evaluation results of Example 1-9 are set to 100.

Table 6 shows the relative values of the evaluation results of Examples when the evaluation results of Comparative Example 1-3 are set to 100. Table 7 shows the relative values of the evaluation results of Examples when the evaluation results of Example 4-1 are set to 100.

**[Table 1]**

| | Nonaqueous electrolyte solution | Component (I) or comparative compound | | Another additive | | Initial | After storage test | |
|---|---|---|---|---|---|---|---|---|
| | | Type | Content [% by mass] | Type | Content [% by mass] | Resistance | Resistance | Capacity |
| Example 1-1 | Nonaqueous Electrolyte Solution 1-1 | (1e) | 0.03 | - | - | 99 | 99 | 100 |
| Comparative Example 1-1 | Comparative Nonaqueous Electrolyte Solution 1-1 | PRS | 0.03 | - | - | 100 | 100 | 100 |
| Example 1-2 | Nonaqueous Electrolyte Solution 1-2 | (1e) | 0.1 | - | - | 92 | 98 | 100 |
| Comparative Example 1-2 | Comparative Nonaqueous Electrolyte Solution 1-2 | PRS | 0.1 | - | - | 100 | 100 | 100 |
| Example 1-3 | Nonaqueous Electrolyte Solution 1-3 | (1e) | 0.4 | - | - | 72 | 97 | 101 |
| Comparative Example 1-3 | Comparative Nonaqueous Electrolyte Solution 1-3 | PRS | 0.4 | - | - | 100 | 100 | 100 |
| Example 1-4 | Nonaqueous Electrolyte Solution 1-4 | (1e) | 0.7 | - | - | 65 | 97 | 100 |
| Comparative Example 1-4 | Comparative Nonaqueous Electrolyte Solution 1-4 | PRS | 0.7 | - | - | 100 | 100 | 100 |
| Example 1-5 | Nonaqueous Electrolyte Solution 1-5 | (1e) | 1.0 | - | - | 61 | 94 | 99 |
| Comparative Example 1-5 | Comparative Nonaqueous Electrolyte Solution 1-5 | PRS | 1.0 | - | - | 100 | 100 | 100 |
| Example 1-6 | Nonaqueous Electrolyte Solution 1-6 | (1e) | 1.3 | - | - | 58 | 96 | 97 |
| Comparative Example 1-6 | Comparative Nonaqueous Electrolyte Solution 1-6 | PRS | 1.3 | - | - | 100 | 100 | 100 |

**[Table 2]**

| | Nonaqueous electrolyte solution | Component (I) or comparative compound | | Another additive | | Initial | After storage test | |
|---|---|---|---|---|---|---|---|---|
| | | Type | Content [% by mass] | Type | Content [% by mass] | Resistance | Resistance | Capacity |
| Example 1-7 | Nonaqueous Electrolyte Solution 1-7 | (1n) | 0.03 | - | - | 99 | 98 | 100 |
| Comparative Example 1-1 | Comparative Nonaqueous Electrolyte Solution 1-1 | PRS | 0.03 | - | - | 100 | 100 | 100 |
| Example 1-8 | Nonaqueous Electrolyte Solution 1-8 | (1n) | 0.1 | - | - | 92 | 98 | 99 |
| Comparative Example 1-2 | Comparative Nonaqueous Electrolyte Solution 1-2 | PRS | 0.1 | - | - | 100 | 100 | 100 |
| Example 1-9 | Nonaqueous Electrolyte Solution 1-9 | (1n) | 0.4 | - | - | 74 | 97 | 100 |
| Comparative Example 1-3 | Comparative Nonaqueous Electrolyte Solution 1-3 | PRS | 0.4 | - | - | 100 | 100 | 100 |
| Example 1-10 | Nonaqueous Electrolyte Solution 1-10 | (1n) | 0.7 | - | - | 66 | 96 | 99 |
| Comparative Example 1-4 | Comparative Nonaqueous Electrolyte Solution 1-4 | PRS | 0.7 | - | - | 100 | 100 | 100 |

**[Table 3]**

| | Nonaqueous electrolyte solution | Component (I) or comparative compound | | Another additive | | Initial | After storage test | |
|---|---|---|---|---|---|---|---|---|
| | | Type | Content [% by mass] | Type | Content [% by mass] | Resistance | Resistance | Capacity |
| Example 1-1 | Nonaqueous Electrolyte Solution 1-1 | (1e) | 0.03 | - | - | 78 | 110 | 95 |
| Example 1-2 | Nonaqueous Electrolyte Solution 1-2 | (1e) | 0.1 | - | - | 77 | 105 | 97 |
| Example 1-3 | Nonaqueous Electrolyte Solution 1-3 | (1e) | 0.4 | - | - | 72 | 97 | 101 |
| Example 2-4 | Nonaqueous Electrolyte Solution 2-4 | (1e) | 0.4 | VC | 0.5 | 73 | 94 | 103 |
| Example 1-4 | Nonaqueous Electrolyte Solution 1-4 | (1e) | 0.7 | - | - | 76 | 88 | 105 |
| Example 1-5 | Nonaqueous Electrolyte Solution 1-5 | (1e) | 1.0 | - | - | 78 | 81 | 107 |
| Example 1-6 | Nonaqueous Electrolyte Solution 1-6 | (1e) | 1.3 | - | - | 80 | 78 | 103 |
| Example 1-7 | Nonaqueous Electrolyte Solution 1-7 | (1n) | 0.03 | - | - | 78 | 109 | 95 |
| Example 1-8 | Nonaqueous Electrolyte Solution 1-8 | (1n) | 0.1 | - | - | 77 | 105 | 96 |
| Example 1-9 | Nonaqueous Electrolyte Solution 1-9 | (1n) | 0.4 | - | - | 74 | 97 | 100 |
| Example 3-4 | Nonaqueous Electrolyte Solution 3-4 | (1n) | 0.4 | VC | 0.5 | 75 | 91 | 102 |
| Example 1-10 | Nonaqueous Electrolyte Solution 1-10 | (1n) | 0.7 | - | - | 77 | 87 | 104 |
| Comparative Example 1-1 | Comparative Nonaqueous Electrolyte Solution 1-1 | PRS | 0.03 | - | - | 79 | 110 | 95 |
| Comparative Example 1-2 | Comparative Nonaqueous Electrolyte Solution 1-2 | PRS | 0.1 | - | - | 83 | 107 | 97 |
| Comparative Example 1-3 | Comparative Nonaqueous Electrolyte Solution 1-3 | PRS | 0.4 | - | - | 100 | 100 | 100 |
| Comparative Example 1-4 | Comparative Nonaqueous Electrolyte Solution 1-4 | PRS | 0.7 | - | - | 117 | 90 | 105 |
| Comparative Example 1-5 | Comparative Nonaqueous Electrolyte Solution 1-5 | PRS | 1.0 | - | - | 128 | 86 | 108 |
| Comparative Example 1-6 | Comparative Nonaqueous Electrolyte Solution 1-6 | PRS | 1.3 | - | - | 139 | 81 | 106 |

**[Table 4]**

| | Nonaqueous electrolyte solution | Component (I) or comparative compound | | Another additive | | Initial | After storage test | |
|---|---|---|---|---|---|---|---|---|
| | | Type | Content [% by mass] | Type | Content [% by mass] | Resistance | Resistance | Capacity |
| Example 1-3 | Nonaqueous Electrolyte Solution 1-3 | (le) | 0.4 | - | - | 100 | 100 | 100 |
| Example 2-1 | Nonaqueous Electrolyte Solution 2-1 | (le) | 0.4 | ESA | 0.5 | 98 | 86 | 106 |
| Example 2-2 | Nonaqueous Electrolyte Solution 2-2 | (le) | 0.4 | DFOB | 0.5 | 94 | 94 | 102 |
| Example 2-3 | Nonaqueous Electrolyte Solution 2-3 | (le) | 0.4 | FSI | 0.5 | 99 | 97 | 100 |
| Example 2-4 | Nonaqueous Electrolyte Solution 2-4 | (le) | 0.4 | VC | 0.5 | 102 | 97 | 102 |
| Example 2-5 | Nonaqueous Electrolyte Solution 2-5 | (le) | 0.4 | TFOP | 0.5 | 96 | 96 | 104 |
| Example 2-6 | Nonaqueous Electrolyte Solution 2-6 | (le) | 0.4 | DFP | 0.5 | 93 | 86 | 104 |
| Example 2-7 | Nonaqueous Electrolyte Solution 2-7 | (le) | 0.4 | FS | 0.5 | 101 | 90 | 107 |

**[Table 5]**

| | Nonaqueous electrolyte solution | Component (I) or comparative compound | | Another additive | | Initial | After storage test | |
|---|---|---|---|---|---|---|---|---|
| | | Type | Content [% by mass] | Type | Content [% by mass] | Resistance | Resistance | Capacity |
| Example 1-9 | Nonaqueous Electrolyte Solution 1-9 | (1n) | 0.4 | - | - | 100 | 100 | 100 |
| Example 3-1 | Nonaqueous Electrolyte Solution 3-1 | (1n) | 0.4 | DFP | 0.5 | 92 | 84 | 105 |
| Example 3-2 | Nonaqueous Electrolyte Solution 3-2 | (1n) | 0.4 | FS | 0.5 | 99 | 89 | 106 |
| Example 3-3 | Nonaqueous Electrolyte Solution 3-3 | (1n) | 0.4 | MSF | 0.5 | 94 | 90 | 104 |
| Example 3-4 | Nonaqueous Electrolyte Solution 3-4 | (1n) | 0.4 | VC | 0.5 | 102 | 94 | 102 |
| Example 3-5 | Nonaqueous Electrolyte Solution 3-5 | (1n) | 0.4 | DFBOP | 0.5 | 94 | 89 | 105 |
| Example 3-6 | Nonaqueous Electrolyte Solution 3-6 | (1n) | 0.4 | BOB | 0.5 | 105 | 86 | 108 |
| Example 3-7 | Nonaqueous Electrolyte Solution 3-7 | (1n) | 0.4 | FSI | 0.5 | 100 | 98 | 101 |

**[Table 6]**

| | Nonaqueous electrolyte solution | Component (I) or comparative compound | | Another additive | | Initial | After storage test | |
|---|---|---|---|---|---|---|---|---|
| | | Type | Content [% by mass] | Type | Content [% by mass] | Resistance | Resistance | Capacity |
| Example 1-3 | Nonaqueous Electrolyte Solution 1-3 | (le) | 0.4 | - | - | 72 | 97 | 101 |
| Example 1-3a | Nonaqueous Electrolyte Solution 1-3a | (le) | 0.3 | PRS | 0.1 | 80 | 98 | 100 |
| Comparative Example 1-3 | Comparative Nonaqueous Electrolyte Solution 1-3 | PRS | 0.4 | - | - | 100 | 100 | 100 |

**[Table 7]**

| | Nonaqueous electrolyte solution | Component (I) or comparative compound | | Another additive | | Initial | After storage test | |
|---|---|---|---|---|---|---|---|---|
| | | Type | Content [% by mass] | Type | Content [% by mass] | Resistance | Resistance | Capacity |
| Example 4-1 | Nonaqueous Electrolyte Solution 1-3 | (le) | 0.4 | - | - | 100 | 100 | 100 |
| Example 4-2 | Nonaqueous Electrolyte Solution 1-9 | (1n) | 0.4 | - | - | 103 | 99 | 103 |
| Example 4-3 | Nonaqueous Electrolyte Solution 4-1 | (le) | 0.4 | FEC | 4.0 | 98 | 83 | 109 |
| Example 4-4 | Nonaqueous Electrolyte Solution 4-2 | (1n) | 0.4 | FEC | 4.0 | 100 | 86 | 111 |

From the results of Table 1, the respective Examples 1-1 to 1-6 in which the content of Component (I) differed could prevent the increase in the initial resistance, compared to the respective Comparative Examples in Comparative Examples 1-1 to 1-6 in which the content of the comparative compounds corresponded to the content of the above Component (I).

From the results in Table 2, with respect to Examples 1-7 to 1-10 and Comparative Examples 1-1 to 1-4 in which the type of Component (I) varied, the respective Examples could prevent the increase in the initial resistance compared to the respective Comparative Examples corresponding to the Examples.

From the results in Table 3, it was confirmed that 0.05% by mass or more of the content of Component (I) enhanced the effect of preventing the increase in the initial resistance, and also enhanced the effect of preventing the resistance after the storage test, which is more preferable. Furthermore, it was confirmed that 0.2% by mass or more of the content of Component (I) enhanced the effect of preventing the increase in the initial resistance and also enhanced the effect of improving the capacity and resistance after the storage test, which is more preferable. It was confirmed that 1.2% by mass or less of the content of Component (I) enhanced the effect of preventing the increase in the initial resistance and also enhanced the effect of improving the capacity after the storage test, which is more preferable. Furthermore, it was confirmed that 0.6 % by mass or less of the content of Component (I) further enhanced the effect of preventing the increase in the initial resistance, which is more preferable.

As can be seen from the results in Tables 4 and 5, the use of Component (I) together with another additive (ESA, DFOB, FSI, DFP, FS, MSF, VC, TFOP, DFBOP, BOB) improved the capacity and resistance after the storage test, with the effect of preventing the increase in the initial resistance kept. When VC was contained as another additive, the initial resistance was slightly higher than that of a VC-free case (comparison between Example 2-4 and Example 1-3 in Table 4, comparison between Example 3-4 and Example 1-9 in Table 5), and Table 3 shows that even when VC was contained as another additive, the effect of preventing the increase in the initial resistance could be maintained. In Example 2-7 and Example 3-6, the initial resistance was slightly higher than that of a another-additive-free case, and the results (relative values when the initial resistance value in Comparative Example 1-3 is set to 100 were 73 and 75, respectively) of Examples 2-4 and 3-4 shown in Table 3 above showed that the effect of preventing the increase in initial resistance could be similarly maintained.

Nonaqueous Electrolyte Solution 1-3a according to Example 1-3a in Table 6 had a composition in which a part of PRS in Comparative Nonaqueous Electrolyte Solution 1-3 was replaced with Compound (1e) as Component (I). As can be seen from the results in Table 6, it was confirmed that when Component (I) was contained, the effect of preventing the increase in initial resistance could be maintained even when PRS is used as another additive. As shown in Table 7, even when the negative electrode was changed to a silicon-containing graphite negative electrode and FEC was used as another additive, the effect of preventing the increase in the initial resistance was maintained and the capacity and resistance after the storage test were further improved.

### INDUSTRIAL APPLICABILITY

The present disclosure allows for providing a nonaqueous electrolyte solution and a nonaqueous electrolyte solution battery having an excellent effect of preventing an increase in initial resistance, and a method for producing a nonaqueous electrolyte solution battery.

Although the present invention has been described in detail and with reference to specific examples, it will be apparent to those skilled in the art that various changes and modifications can be made without departing from the spirit and scope of the present invention.

The present application is based on a Japanese Patent Application No. 2021-58532 filed on March 30, 2021, and the contents of which are incorporated herein by reference.

## Claims

1. A nonaqueous electrolyte solution, comprising:
a compound represented by the following Formula (1);
a solute; and
a nonaqueous organic solvent, 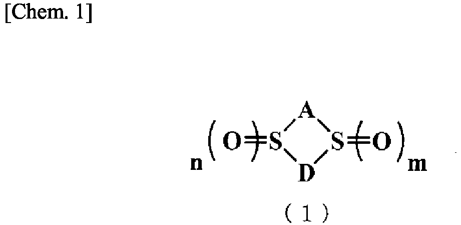
where, m and n each independently represent 1 or 2;
A is a single bond, a linear hydrocarbon group having 1 to 5 carbon atoms, or a branched hydrocarbon group having 2 to 5 carbon atoms, any hydrogen atom of the hydrocarbon group may be substituted with a fluorine atom, and an oxygen atom may be included between a carbon atom-carbon atom bond in the hydrocarbon group;
D is a linear hydrocarbon group having 1 to 5 carbon atoms or a branched hydrocarbon group having 2 to 5 carbon atoms, any hydrogen atom of the hydrocarbon group may be substituted with a fluorine atom, and an oxygen atom may be included between a carbon atom-carbon atom bond in the hydrocarbon group; and
a total number of carbon atoms of the A and the D is 3 or more.

2. The nonaqueous electrolyte solution according to claim 1,
wherein the A is a -CH₂- group, the D is a -C₂H₄- group or a -C₃H₆- group, and m and n are both represent 2.

3. The nonaqueous electrolyte solution according to claim 1,
wherein the compound represented by the Formula (1) is at least one compound selected from the group consisting of compounds of the following (1a) to (1r),
(1a) A = -CH₂- group, D = -C₂H₄- group, m = 1, n = 1
(1b) A = -CH(CH₃)- group, D = -C₂H₄- group, m = 1, n = 1
(1c) A = -C(CH₃)₂- group, D = -C₂H₄- group, m = 1, n = 1
(1d) A = single bond, D = -C₃H₆- group, m = 1, n = 1
(1e) A = -CH₂- group, D = -C₂H₄- group, m = 2, n= 2
(1f) A = CH(CH₃)- group, D = -C₂H₄- group, m = 2, n = 2
(1g) A = -C(CH₃)₂- group, D = -C₂H₄- group, m = 2, n = 2
(1h) A = single bond, D = -C₃H₆- group, m = 2, n = 2
(1i) A = -CH₂- group, D = -C₃H₆- group, m = 1, n = 1
(1j) A = -CH(CH₃)- group, D = -C₃H₆- group, m = 1, n = 1
(1k) A = -C(CH₃)₂- group, D = -C₃H₆- group, m = 1, n = 1
(11) A = single bond, D = -C₄H₈- group, m = 1, n = 1
(1m) A = -C₂H₄- group, D = -C₂H₄- group, m = 1, n = 1
(1n) A = -CH₂- group, D = -C₃H₆- group, m = 2, n = 2
(1o) A = -CH(CH₃)- group, D = -C₃H₆- group, m = 2, n = 2
(1p) A = -C(CH₃)₂- group, D = -C₃H₆- group, m = 2, n = 2
(1q) A = single bond, D = -C₄H₈-group, m = 2, n = 2
(1r) A = -C₂H₄- group, D = -C₂H₄- group, m = 2, n = 2.

4. The nonaqueous electrolyte solution according to claim 3,
wherein the compound represented by the Formula (1) is at least one compound selected from the group consisting of the compounds of (1a), (1b), (1c), (1d), (1e), (1f), (1h), (1i), (1j), (1l), (1m), (1n), (1o), (1q), and (1r).

5. The nonaqueous electrolyte solution according to claim 3 or 4,
wherein the compound represented by the Formula (1) is the compound of (1e) or (1n).

6. The nonaqueous electrolyte solution according to any one of claims 1 to 5,
wherein the nonaqueous organic solvent contains at least one selected from the group consisting of cyclic carbonate and chain carbonate.

7. The nonaqueous electrolyte solution according to claim 6,
wherein the cyclic carbonate is at least one selected from the group consisting of ethylene carbonate, propylene carbonate, and fluoroethylene carbonate, and the chain carbonate is at least one selected from the group consisting of ethyl methyl carbonate, dimethyl carbonate, diethyl carbonate, and methyl propyl carbonate.

8. The nonaqueous electrolyte solution according to any one of claims 1 to 7,
wherein a content of the compound represented by the Formula (1) with respect to a total amount of the compound represented by the Formula (1), the solute, and the nonaqueous organic solvent is 0.01% by mass to 10.0% by mass.

9. The nonaqueous electrolyte solution according to any one of claims 1 to 8, further comprising:
at least one selected from vinylene carbonate, fluoroethylene carbonate, ethylene sulfate, lithium bis(oxalato)borate, lithium difluorooxalatoborate, lithium difluorobis(oxalato)phosphate, lithium tetrafluorooxalatophosphate, lithium bis(fluorosulfonyl)imide, lithium bis(difluorophosphonyl)imide, lithium (difluorophosphonyl)(fluorosulfonyl)imide, lithium difluorophosphate, lithium fluorosulfonate, and methanesulfonyl fluoride.

10. A nonaqueous electrolyte solution battery, comprising:
a positive electrode;
a negative electrode; and
the nonaqueous electrolyte solution according to any one of claims 1 to 9.

11. A method for producing a nonaqueous electrolyte solution battery, comprising:
preparing the nonaqueous electrolyte solution according to any one of claims 1 to 9; and
filling an empty cell including at least a positive electrode and a negative electrode with the nonaqueous electrolyte solution.
